# EUROPÄISCHE PATENTSCHRIFT

(11) **EP 1 891 342 B1**
(45) Veröffentlichungstag und Bekanntmachung des Hinweises auf die Patenterteilung: **14.01.2009**
(21) Anmeldenummer: 06724439.2
(22) Anmeldetag: 20.04.2006
(51) Int. Cl.: F16B 37/02, F16B 37/08

(54) **FEDERMUTTER**
SPRING NUT
ÉCROU À RESSORT

(30) Priorität: 30.05.2005 DE 102005024712
(43) Veröffentlichungstag der Anmeldung: 27.02.2008
(73) Patentinhaber: A. RAYMOND ET CIE, 38000 Grenoble (FR)
(72) Erfinder: SPITZ, Uwe, 79618 Rheinfelden (DE)
(74) Vertreter: Rüttgers, Joachim
(86) Internationale Anmeldenummer: PCT/EP2006/003597
(87) Internationale Veröffentlichungsnummer: WO 2006/128522

(56) Entgegenhaltungen:
- US-A- 2 297 102
- US-A- 2 377 694
- US-A- 3 459 096
- US-A- 4 714 392
- US-A- 5 897 281

## Beschreibung

Die Erfindung betrifft eine Federmutter gemäß dem Oberbegriff des Patentanspruches 1.

Eine derartige Federmutter ist aus der DE 197 33 771 C1 bekannt. Bei der vorbekannten Federmutter sind an einem Rahmen zwei einander gegenüberliegende federnde Klemmschenkel angesetzt, die in eine Ausnehmung des Rahmens hineinragen und zum Eingriff mit einem Bolzen, insbesondere einem Gewindebolzen, dienen, so dass die Federmutter unter Andrücken beispielsweise eines Anbauteiles auf ein mit dem Bolzen verbundenen Trägerteiles mit dem Bolzen verbunden ist.

Der Erfindung liegt die Aufgabe zugrunde, eine Federmutter der eingangs genannten Art anzugeben, die sich durch eine sehr geringe Aufsteckkraft, eine sehr hohe Haltekraft sowie bei einem beabsichtigten Entfernen der Federmutter von dem Bolzen durch eine wiederum sehr geringe Abzugskraft auszeichnet.

Diese Aufgabe wird bei einer Federmutter der eingangs genannten Art erfindungsgemäß mit den kennzeichnenden Merkmalen des Patentanspruches 1 gelöst.

Dadurch, dass bei der erfindungsgemäßen Federmutter ein Verschlussschenkel vorhanden ist, der zum Erzeugen der Haltekraft auf wenigstens einen Klemmschenkel einwirkt sowie in einer Schließstellung mit einer Halteanordnung in Eingriff kommt und damit in der Schließstellung fixiert ist, lässt sich die erfindungsgemäße Federmutter mit einer sehr geringen Aufsteckkraft auf den Bolzen aufschieben, wobei die Federmutter in der Schließstellung des Verschlussschenkels eine verhältnismäßig hohe Haltekraft auf den Bolzen ausübt und sich nach Lösen des Eingriffs des Verschlussschenkels mit der Halteanordnung wieder mit einer verhältnismäßig geringen Abzugskraft von dem Bolzen abnehmen lässt.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Federmutter mit einem Verschlussschenkel in einer Freigabestellung und
- Fig. 2: in einer perspektivischen Ansicht das Ausführungsbeispiel gemäß Fig. 1 im Eingriff mit einem Bolzen, wobei der Verschlussschenkel in einer Schließstellung ist.

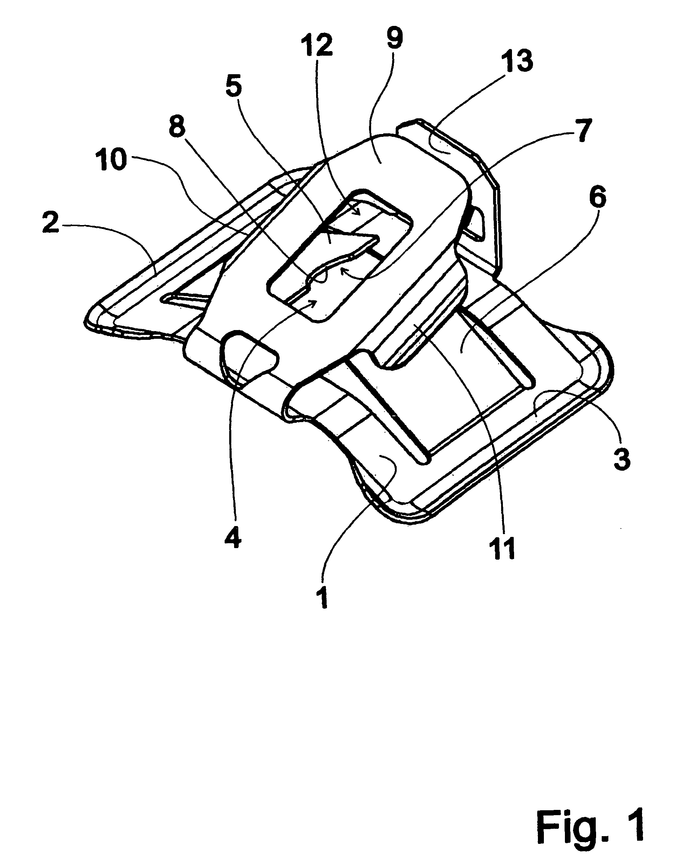

Fig. 1 zeigt in einer perspektivischen Ansicht ein Ausführungsbeispiel einer erfindungsgemäßen Federmutter. Das Ausführungsbeispiel gemäß Fig. 1 ist aus einem Blech, beispielsweise einem Stahlblech, gestanzt und verfügt über einen umlaufenden Rahmen 1, der ausgehend von zwei randseitigen Fußabschnitten 2, 3 in eine Richtung von der Ebene der Fußabschnitte 2, 3 wegweisend aufgebogen ist.

Im Innenbereich des umlaufenden Rahmens 1 ist eine im Wesentlichen rechteckförmige Rahmenausnehmung 4 als Ausnehmung ausgebildet, in die an jeweils einem Fußabschnitt 2, 3 angesetzte Klemmschenkel 5, 6 hineinragen. Die Klemmschenkel 5, 6 folgen in etwa dem Verlauf von von den Fußabschnitten 2, 3 aufsteigenden Verbindungsabschnitten und sind mit ihren von den Fußabschnitten 2, 3 wegweisenden freien Enden in einem Abstand voneinander angeordnet. An den freien Enden weisen die Klemmschenkel 5, 6 jeweils eine Randausnehmung 7 mit einem kreisbogenförmigen Innenrand 8 auf.

Im Mittenbereich eines sich zwischen den Fußabschnitten 2, 3 erstreckenden Verbindungsabschnittes des Rahmens 1 ist federnd ein Verschlussschenkel 9 angesetzt, der sich in Richtung des gegenüberliegenden Verbindungsabschlnittes des Rahmens 1 erstreckt. Der Verschlussschenkel 9 weist an den im Bereich der Klemmschenkel 5, 6 liegenden Randseiten als Bestandteile einer Vorsprungsanordnung Randstege 10, 11 auf, die in Richtung der Klemmschenkel 5, 6 umgebogen sind. Weiterhin ist der Verschlussschenkel 9 mit einer Durchgriffsausnehmung 12 ausgebildet, die in ihrer Breite vorzugsweise größer als der Abstand zwischen den freien Enden der Klemmschenkel 5, 6 ist und in ihrer Länge in etwa der entsprechenden Abmessung der Rahmenausnehmung 4 entspricht.

Schließlich verfügt die Federmutter gemäß dem dargestellten Ausführungsbeispiel als Teil einer Halteanordnung über einen Halteschenkel 13, der an dem dem Ansatzbereich des Verschlussschenkels 9 gegenüberliegenden Verbindungsabschnitt im Mittenbereich angesetzt ist und sich in etwa rechtwinklig in Richtung des freien Endes des Verschlussschenkels 9 erstreckt.

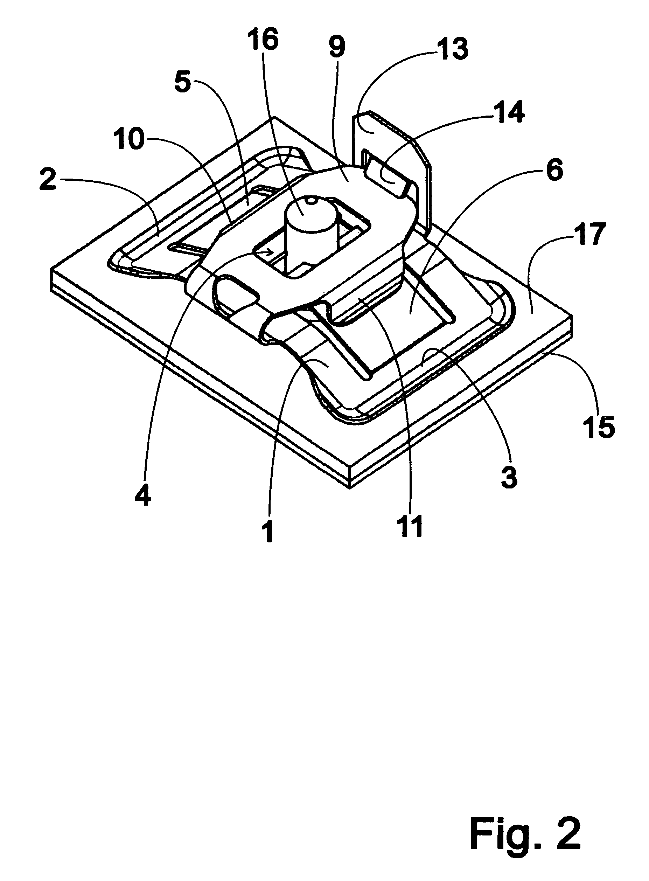

Fig. 2 zeigt in einer perspektivischen Ansicht das Ausführungsbeispiel gemäß Fig. 1 in einer Schließstellung des Verschlussschenkels 9, in der das freie Ende des Verschlussschenkels 9 von einer an dem Halteschenkel 13 angeformten vorspringenden Haltelasche 14 hintergriffen wird. In der Schließstellung wirken die Randstege 10, 11 derart auf die Klemmschenkel 5, 6 ein, dass auf einen in die Rahmenausnehmung 4 eingeführten und die freien Enden der Klemmschenkel 5, 6 passierenden, mit einem Trägerteil 15 fest verbundenen, mit wie hier dargestellt einer glatten Außenwand oder alternativ mit einem Fein- oder Grobgewinde versehenen Bolzen 16 eine Haltekraft ausüben, die gegenüber der Aufsteckkraft in der Fig. 1 dargestellten geöffneten Freigabestellung des Verschlussschenkels 9 deutlich höher ist. Vorteilhafterweise weisen die freien Enden der Klemmschenkel 5, 6 in der Freigabestellung des Verschlussschenkels 9 einen Abstand voneinander auf, der wenigstens einem Standarddurchmesser eines Bolzens 16 entspricht. Zum Erzielen einer gewissen Sicherung der Federmutter bereits in der Freigabestellung des Klemmschenkels 9 ist der Abstand zwischen den freien Enden der Klemmschenkel 5, 6 vorzugsweise kleiner als ein Nenndurchmesser eines Bolzens 16.

Wie aus Fig. 2 ersichtlich ist, lässt sich in der Schließstellung des Verschlussschenkels 9 beispielsweise ein Anbauteil 17 mit dem Trägerteil 15 verbinden. Zum Lösen der erfindungsgemäßen Federmutter ist es lediglich erforderlich, den Halteschenkel 13 von dem freien Ende des Verschlussschenkels 9 weg zu bewegen, bis der Hintergriff der Haltelasche 14 mit dem freien Ende des Verschlussschenkels 9 gelöst ist. Dann federt der Verschlussschenkel 9 von dem Rahmen 1 weg, so dass sich nunmehr wieder eine gegenüber der Haltekraft in der Schließstellung des Verschlussschenkels 9 deutlich geringere Abzugskraft ergibt.

Dabei versteht sich, dass der Zyklus des Aufbringens der Federmutter, des Verschließens und des Abnehmens im Rahmen der Langzeitelastizität des Materiales der Federmutter praktisch beliebig oft wiederholt werden kann, ohne dass sich dadurch die Haltekraft praxisrelevant ändert.

Zweckmäßigerweise ist bei einer nicht dargestellten Weiterbildung der erfindungsgemäßen Federmutter als Verletzungsschutz an dem Verschlussschenkel 9 eine von dem Rahmen 1 wegweisende Bolzenabdeckung ausgebildet.

## Patentansprüche

1. Federmutter zum Befestigen an einem Bolzen (16) mit einem Rahmen (1), der eine Ausnehmung (4) aufweist, und mit wenigstens zwei einander gegenüberliegenden federnden Klemmschenkeln (5, 6), die mit ihren voneinander wegweisenden Enden an dem Rahmen (1) angesetzt sind und mit ihren einander zugewandten freien Enden in die Ausnehmung (4) des Rahmens (1) hineinragen, **dadurch gekennzeichnet, dass** ein Verschlussschenkel (9) vorhanden ist, der mit einem Ende biegsam an dem Rahmen (1) angesetzt ist, und dass eine Halteanordnung (13, 14) ausgebildet ist, mit der der Verschlussschenkel (9) in einer Schließstellung in Eingriff kommt, wobei der Verschlussschenkel (9) in der Schließstellung eine Schließkraft auf wenigstens einen Klemmschenkel (5, 6) ausübt, die zu einer die Federmutter an dem Bolzen (16) haltenden Haltekraft führt.

2. Federmutter nach Anspruch 1, **dadurch gekennzeichnet, dass** der Verschlussschenkel (9) an einem mittig zwischen den Ansatzbereichen von den zwei Klemmschenkeln (5, 6) gelegenen Verbindungsabschnitt mit dem Rahmen (1) verbunden ist und auf alle Klemmschenkel (5, 6) eine Schließkraft ausübt.

3. Federschenkel nach Anspruch 1 oder Anspruch 2, **dadurch gekennzeichnet, dass** der Verschlussschenkel (9) mit einer Vorsprungsanordnung (10, 11) ausgebildet ist, die auf den oder jeden Klemmschenkel (5, 6) zum Erzeugen der jeweiligen Schließkraft einwirkt.

4. Federschenkel nach Anspruch 3, **dadurch gekennzeichnet, dass** die Vorsprungsanordnung eine Anzahl von in Richtung der Klemmschenkel (5, 6) umgebogenen Randstegen (10, 11) aufweist, wobei die Anzahl der Randstege (10, 11) der Anzahl der Klemmschenkel (5, 6) entspricht, mit der der Verschlussschenkel (9) zusammenwirkt, und wobei auf jeden Klemmschenkel (5, 6) ein Randsteg (10, 11) einwirkt.

5. Federschenkel nach einem der Ansprüche 1 bis 4, **dadurch gekennzeichnet, dass** die freien Enden der Klemmschenkel (5, 6) in einer Freigabestellung des Verschlussschenkels (9) einen Abstand voneinander aufweisen, der wenigstens einem Standarddurchmesser eines Bolzens (16) entspricht.

6. Federmutter nach einem der Ansprüche 1 bis 5, **dadurch gekennzeichnet, dass** die freien Ende der Klemmschenkel (5, 6) jeweils eine Randausnehmung (7) mit einem kreisbogenförmigen Innenrand (8) aufweisen.

7. Federschenkel nach einem der Ansprüche 1 bis 6, **dadurch gekennzeichnet, dass** die Halteanordnung einen im Wesentlichen rechtwinklig zu dem Rahmen (1) angesetzten und in Richtung des Verschlussschenkels (9) weisenden federnden Halteschenkel (13) aufweist, an dem eine Eingriffstruktur (14) ausgebildet ist.

8. Federmutter nach Anspruch 7, **dadurch gekennzeichnet, dass** die Eingriffstruktur (14) in einem Abstand von dem freien Ende des Halteschenkels (13) angeordnet ist.

9. Federmutter nach Anspruch 7 oder Anspruch 8, **dadurch gekennzeichnet, dass** die Eingriffstruktur ein Vorsprung (14) ist, der in der Schließstellung des Verschlussschenkels (9) den Verschlussschenkel (9) hintergreift.

## Claims

1. Spring nut for fastening to a bolt (16), comprising a frame (1) which has an opening (4), and comprising at least two springy clamping limbs (5, 6) which are opposite to one another, are attached to the frame (1) at their ends pointing away from one another and project with their free ends facing one another into the opening (4) of the frame (1), **characterized in that** a locking limb (9) is present which is attached flexibly at one end to the frame (1), and **in that** a retaining arrangement (13, 14) with which the locking limb (9) engages in a locked position is formed, the locking limb (9) exerting, in the locked position, a locking force on at least one clamping limb (5, 6), which locking force leads to a retaining force holding the spring nut on the bolt (16).

2. Spring nut according to Claim 1, **characterized in that** the locking limb (9) is connected to the frame (1) in a connecting section located centrally between the attachment regions of the two clamping limbs (5, 6) and exerts a locking force on all clamping limbs (5, 6).

3. Spring limb according to Claim 1 or Claim 2, **characterized in that** the locking limb (9) is formed with a projection arrangement (10, 11) which acts on the or each clamping limb (5, 6) for producing the respective locking force.

4. Spring limb according to Claim 3, **characterized in that** the projection arrangement has a number of edge webs (10, 11) bent over in the direction of the clamping limbs (5, 6), the number of edge webs (10, 11) corresponding to the number of clamping limbs (5, 6) with which the locking limb (9) cooperates, and an edge web (10, 11) acting on each clamping limb (5, 6).

5. Spring limb according to any of Claims 1 to 4, **characterized in that** the free ends of the clamping limbs (5, 6) have, in a release position of the locking limb (9), a spacing which corresponds to at least one standard diameter of a bolt (16).

6. Spring nut according to any of Claims 1 to 5, **characterized in that** the free end of the clamping limbs (5, 6) each have an edge recess (7) having an arc-shaped inner edge (8).

7. Spring limb according to any of Claims 1 to 6, **characterized in that** the retaining arrangement has a springy retaining limb (13) which is attached substantially at right angles to the frame (1) and points in the direction of the locking limb (9) and on which an engaging structure (14) is formed.

8. Spring nut according to Claim 7, **characterized in that** the engaging structure (14) is arranged at a distance from the free end of the retaining limb (13).

9. Spring nut according to Claim 7 or Claim 8,
**characterized in that** the engaging structure is a projection (14) which, in the locked position of the locking limb (9), engages behind the locking limb (9).

## Revendications

1. Empreinte de vissage pour fixation sur un boulon (16) se composant d'une cage (1) qui comporte un évidement (4), et au moins deux bretelles de serrage (5, 6) respectivement opposées, dont les extrémités allant en s'écartant l'une de l'autre vers l'extérieur sont attenantes à la cage (1) et dont les extrémités libres orientées l'une vers l'autre font saillie dans l'évidement (4) de la cage (1), **caractérisée en ce qu'**elle comporte une patte de verrouillage (9) dont une extrémité est réalisée attenante de la cage (1) avec la possibilité de réagir élastiquement et **en ce qu'**il est prévu un dispositif de retenue (13, 14) qui vient en prise d'engagement avec la patte de verrouillage (9) dans une position de fermeture, la patte de verrouillage (9) exerçant en l'occurrence, en position de fermeture, sur au moins une bretelle de serrage (5, 6), une force de fermeture qui engendre une force assurant le maintien de l'empreinte de vissage en application contre le boulon (16).

2. Empreinte de vissage selon la revendication 1, **caractérisée en ce que** la patte de verrouillage (9) est raccordée à la cage (1) par une portion de liaison disposée en position centrale entre les zones d'attache des deux bretelles de serrage (5, 6) et qu'elle exerce une force de fermeture sur toutes les bretelles de serrage (5, 6).

3. Empreinte de vissage selon la revendication 1 ou la revendication 2, **caractérisée en ce que** la patte de verrouillage (9) est munie d'un dispositif formant saillie (10, 11) qui agit sur la ou sur chaque bretelle de serrage (5, 6) pour engendrer respectivement la force de fermeture.

4. Empreinte de vissage selon la revendication 3, **caractérisée en ce que** le dispositif formant saillie est muni d'un certain nombre de segments de rive (10, 11) repliés en direction des bretelles de serrage (5, 6), le nombre des segments de rive (10, 11) correspondant en l'occurrence au nombre des bretelles de serrage (5, 6) en combinaison avec lesquelles la patte de verrouillage (9) opère, et un segment de rive (10, 11) exerçant en l'occurrence une action sur chaque bretelle de serrage (5, 6).

5. Empreinte de vissage selon l'une des revendications 1 à 4, **caractérisée en ce que** les extrémités libres des bretelles de serrage (5, 6) dans la position de dégagement de la patte de verrouillage (9) sont écartées l'une de l'autre dans une proportion qui correspond au moins au diamètre standard d'un boulon (16).

6. Empreinte de vissage selon l'une des revendications 1 à 5, **caractérisée en ce que** les extrémités libres des bretelles de serrage (5, 6) comportent respectivement un évidement de rive (7) dont le bord intérieur est profilé en forme d'arc de cercle.

7. Empreinte de vissage selon l'une des revendications 1 à 6, **caractérisée en ce que** le dispositif de retenue comprend une patte de retenue élastique (13), réalisée attenante à la cage (1) selon une disposition sensiblement en angle droit et orientée en direction de la patte de verrouillage (9), qui est munie d'une structure de mise en prise d'accrochage (14).

8. Empreinte de vissage selon la revendication 7, **caractérisée en ce que** la structure de mise en prise d'accrochage (14) est disposée à une certaine distance de l'extrémité libre de la patte de retenue (13).

9. Empreinte de vissage selon la revendication 7 ou la revendication 8, **caractérisée en ce que** la structure de mise en prise d'accrochage se présente sous la forme d'une portion en saillie (14) qui, dans la position de fermeture de la patte de verrouillage (9), vient cramponner par derrière la patte de verrouillage (9).
